# EUROPÄISCHE PATENTANMELDUNG

(11) **EP 2 840 636 A1**
(43) Veröffentlichungstag der Anmeldung: **25.02.2015**
(21) Anmeldenummer: 13185966.2
(22) Anmeldetag: 25.09.2013
(51) Int. Cl.: H01M 8/04, H01M 8/10

(54) **Verfahren zum Betrieb eines Brennstoffzellenstapels sowie Brennstoffzellenstapel und Brennstoffzellenanlage**

(30) Priorität: 20.08.2013 DE 102013216464
(71) Anmelder: Siemens Aktiengesellschaft, 80333 München (DE)
(72) Erfinder: Brandt, Torsten, 91301 Forchheim (DE); Hammerschmidt, Albert, 91056 Erlangen (DE)

(57) **Zusammenfassung**

Die Erfindung betrifft ein Verfahren zum Betrieb eines Brennstoffzellenstapels (2) umfassend eine Anzahl von Brennstoffzellen und zumindest einen Gaskreislauf (6, 8), wobei gaseingangsseitig der Brennstoffzellen als Reaktionsgase Sauerstoff und Wasserstoff zugeführt werden und wobei zumindest Sauerstoff über den Gaskreislauf (6) in einem Zirkulationsbetrieb in den Brennstoffzellen zugeführt wird, um einen einfachen Aufbau des Brennstoffzellenstapels (2) zu ermöglichen, bei dem eine zuverlässige Intergasentsorgung erfolgt.

## Beschreibung

Die Erfindung betrifft ein Verfahren zum Betrieb eines Brennstoffzellenstapels. Die Erfindung betrifft weiterhin einen Brennstoffzellenstapel sowie eine Brennstoffzellenanlage mit einem solchen Brennstoffzellenstapel.

Wasserstoff-Sauerstoff-PEM(proton exchange membare)-Brennstoffzellen werden mit beiden Medien Wasserstoff und Sauerstoff als Reaktanden betrieben. Diese Reaktionsgase enthalten aus dem Herstellungsprozess stammend je nach Reinheitsgrad zwischen 1 und 0,001 Vol.-% Intert- oder Edelgase. Im Brennstoffzellenbetrieb reichern sich diese Intertgas-Komponenten in den Reaktandenräumen an und müssen entfernt werden, um den Brennstoffzellenbetrieb nicht zu behindern. Aus diesem Grund müssen die Intertgase kontinuierlich oder in Intervallen aus der Brennstoffzelle entfernt werden. In gut durchlüfteter Umgebung (beispielsweise im Freien) ist dies auf der Sauerstoffseite unproblematisch, auf der Wasserstoffseite ist durch geeignete Gasführung dafür zu sorgen, dass durch das Anodenrestgas keine brennbaren Gasgemische entstehen können. In geschlossener Atmosphäre (beispielsweise in einem U-Boot) sollen diese sogenannten Restgasmengen auf ein Minimum reduziert werden. Zudem bedeuten geringe Restgasmengen auch einen hohen Ausnutzungsgrad der Reaktanden.

Eine Intergasverträglichkeit der Wasserstoff-Sauerstoff-Brennstoffzellen, niedrige Restgasmengen und eine hohe Ausnutzung der Reaktanden wird beispielsweise durch eine sogenannte Kaskadierung der Brennstoffzellen erreicht. Eine derartige Kaskadierung der Brennstoffzellen ist z.B. in der EP 2122737 A1 beschrieben. Diese Kaskadierung stellt eine Abfolge von ineinander verschachtelten Wasserstoff-Sauerstoff-Kreisläufen mit zunehmender Intertgaskonzetration pro Kaskade (=Kreislauf) dar, die in der letzen Kaskade, den sogenannten Spülzellen, endet. Die Spannung dieser Zellen regelt die Entsorgung der Spülzellen und damit des gesamten Brennstoffzellenstapels. Auf diese Weise lassen sich niedrigere Restgasmengen realisieren, wie es z.B. in einem U-Boot wünschenswert ist.

Die oben beschriebene Lösung bedeutet jedoch einen relativ komplexen Aufbau des Brennstoffzellenstapels mit unterschiedlichen Komponenten auf der Zellebene zur Realisierung der internen Kaskadierung und eine damit verbundene aufwendige Verfahrens- und Steuertechnik (Abscheider, Ventile, etc.).

Der Erfindung liegt daher die Aufgabe zugrunde, einen einfachen Aufbau eines Brennstoffzellenstapels einer Brennstoffzellenanlage zu ermöglichen, bei dem eine zuverlässige Intergasentsorgung erfolgt.

Die Aufgabe wird erfindungsgemäß gelöst durch ein Verfahren zum Betrieb eines Brennstoffzellenstapels umfassend eine Anzahl von Brennstoffzellen und zumindest einen Gaskreislauf, wobei gaseingangsseitig der Brennstoffzellen als Reaktionsgase Sauerstoff und Wasserstoff zugeführt werden und wobei zumindest der Sauerstoff über den Gaskreislauf in einem Zirkulationsbetrieb in den Brennstoffzellen zugeführt wird.

Die Aufgabe wird weiterhin erfindungsgemäß gelöst durch einen Brennstoffzellenstapel umfassend eine Anzahl von Brennstoffzellen, wobei Gaseingangsseitig als Reaktionsgase Sauerstoff und Wasserstoff zuführbar sind, weiterhin umfassend zumindest sauerstoffseitig einen Gaskreislauf für einen Zirkulationsbetrieb des Sauerstoffs.

Die Aufgabe wird schließlich erfindungsgemäß gelöst durch eine Brennstoffzellenanlage, insbesondere eine PEM-Brennstoffzellenanlage, mit zumindest einem derartigen Brennstoffzellenstapel.

Weitere vorteilhafte Ausgestaltungen und Ausführungsformen sind in den abhängigen Ansprüchen gekennzeichnet.

Die Erfindung basiert auf der Erkenntnis, dass die fertigungs- und verfahrenstechnische Komplexität eines für den Betrieb mit Wasserstoff und Sauerstoff ausgebildeten Brennstoffzellenstapels sich durch die Verwendung eines Zirkulationsbetriebs vereinfachen lässt. Hierbei sind die Besonderheiten des Betriebs mit reinem Sauerstoff zu berücksichtigen. Zirkulationsbetrieb im Gaskreislauf auf der Luftseite einer mit Luft betriebenen PEM-Brennstoffzelle ist typisch, da üblicherweise ein Luftüberschuss durch die Brennstoffzelle kathodenseitig gespült wird. Im Sauerstoffbetrieb ist insbesondere die Materialauswahl (Metalle, Dichtungen, etc.) von besonderer Bedeutung. Üblicherweise widerstehen konventionelle Konstruktionsmaterialien luftatmender Brennstoffzellen die Anforderungen im Sauerstoffbetrieb nicht.

Erfindungsgemäß ist ein Zirkulationsbetrieb zumindest des Sauerstoffs vorgesehen, bevorzugt werden jedoch beide Reaktionsgase Sauerstoff und Wasserstoff im Zirkulationsbetrieb dem Brennstoffzellenstapels zugeführt. Hierzu sind zwei separate Gaskreisläufe vorgesehen. Vorzugsweise werden dabei der sauerstoffseitige und der wasserstoffseitige Zirkulationsbetrieb unabhängig voneinander gesteuert oder geregelt.

Gemäß einer bevorzugten Ausführungsvariante wird eine Konzentration des im Gaskreislauf befindlichen Reaktionsgases gemessen und aufgrund einer Konzentrationsänderung wird die Zufuhr und/oder Entsorgung des Reaktionsgases gesteuert oder geregelt. Die Konzentrationsänderung kann dabei direkt über Konzentrationsmessvorrichtungen erfasst werden. Eine Veränderung der Betriebsparameter des Zirkulationsbetriebs im Gaskreislauf fängt dabei insbesondere bei einer Konzentration von 3 Vol.-% Intergas im Wasserstoffstrom und von 15 Vol.-% Intergas im Sauerstoffstrom an.

Gemäß einer weiteren, bevorzugten Ausführungsvariante wird eine Zellspannung der Brennstoffzellen gemessen und aufgrund einer Zellspannungsänderung wird die Zufuhr und/oder Entsorgung des Reaktionsgases gesteuert oder geregelt. Hierbei erfolgt eine indirekte Messung der Konzentrationsänderung über die Zellspannung.

Als Reaktion auf einen Anstieg des Intergasanteils im Gaskreislauf wird zweckdienlicherweise ein Volumenstrom (weiterhin auch als Zirkulationsrate bezeichnet) des im Gaskreislauf vorhandenen Reaktionsgases verändert. Dies erfolgt insbesondere über eine Drehzahlregelung eines im Gaskreislauf eingebauten Verdichters für das Reaktionsgas. Ergänzend oder alternativ wird vorzugsweise das im Gaskreislauf vorhandene Reaktionsgas zumindest partiell hinausgeleitet und frisches Reaktionsgas zugeführt. Zum Beginn eines Anstieges der Intergasanteils im Reaktionsgas wird insbesondere der Volumenstrom des Reaktionsgases erhöht. Somit wird eine hohe Ausnutzung der Gasmengen erreicht. Wenn diese Maßnahme nicht ausreichend ist, d.h. wenn der Intergasanteil weiter ansteigt, wird ein Teil des Reaktionsgases entsorgt und durch Frischgas ersetzt. Dies erhöht den Wirkungsgrad des Prozesses im Brennstoffzellenstapel.

Der Zirkulationsbetrieb eines Wasserstoff-Sauerstoff-PEM-Brennstoffzellenstapels beginnt somit insbesondere mit einer Gaskonzentration von jeweils 100% des jeweiligen Reaktionsgases und nimmt anfangs rasch ab; im Dauerbetrieb (eingeschwungener Zustand) beträgt der Inertgasanteil maximal typischerweise um 40% beim Sauerstoff und um 5% beim Wasserstoff. Dabei wird die Intertgasverträglichkeit (d.h. die Spannungs- bzw. Leistungskontanz) der Wasserstoff-Sauerstoff-PEM-Brennstoffzelle erreicht durch:
1) Bei steigendem Intergasanteil bzw. sinkender Zellspannung wird die Zirkulation erhöht und bei einer entsprechenden Intergasmenge bzw. unterschrittener Zellspannung werden die Gasräume für Sauerstoff und Wasserstoff unabhängig voneinander partiell entsorgt und entsprechend wird neuer Reaktand hinzugefügt; oder
2) Bei steigendem Intergasanteil bzw. sinkender Zellspannung wird die Zirkulation erhöht und bei einer entsprechenden Inertgasmenge bzw. unterschrittener Zellspannung bzw. erforderlichen Restgasmenge für einen Wasserstoff-Rekombinator werden die Gasräume partiell entsorgt und entsprechend neuer, frischer Reaktand hinzugefügt. In diesem Fall bestimmt die für den Wasserstoff-Rekombinator optimale, d.h. geringstes Volumen verursachende, Umsetzung der Restgase Wasserstoff und Sauerstoff zu Wasser das Spülverhalten des Brennstoffzellenstapels.

Insbesondere wird der Wasserstoff- bzw. Sauerstoff-Anteil in den jeweiligen Reaktandenräumen parallel mit geeigneten Sensoren ermittelt und daraus wird die Spülung veranlasst. Alternativ oder ergänzend wird die Konzentration eines der Restgase, insbesondere vom Wasserstoff, detektiert und die Zirkulationsgeschwindigkeit und das Spülen, insbesondere des Sauerstoff-Kreislaufs, werden über die Zellspannung geregelt.

Die Zirkulationsrate (d.h. der Volumenstrom oder Durchsatz am Reaktionsgas im Gaskreislauf) wird vorzugsweise durch eine Druckverlustmessung, beispielsweise über dem Verdichter oder der Brennstoffzelle bestimmt. Über den Druckverlust kann die Strömungsgeschwindigkeit bzw. der Volumenstrom (ein minimaler Volumenstrom sollte nicht unterschritten werden) der Reaktionsgase bestimmt werden.

Eine Erhöhung des Drucks in den Brennstoffzellen bzw. im Brennstoffzellenstapel wird insbesondere durch die Anordnung eines Zufuhrventils zwischen dem Austritt des Brennstoffzellenstapels und dem Verdichter (oder einer Zirkulationspumpe) erreicht.

Ein Entsorgungsventil für die Restgasentsorgung ist dabei zweckdienlicherweise als ein 3-Wege-Ventil ausgeführt. Somit wird der intertgashaltige Reaktand bei einer Entsorgung vom Brennstoffzellen-Austritt hinausgeleitet und der Brennstoffzellen-Eintritt wird parallel mit frischem Reaktand über das Zufuhrventil versorgt, wobei eine Vermischung des intertgashaltigen Reaktionsgases mit dem Frischgas vermieden wird.

Der Zirkulationsbetrieb wird insbesondere auf mehrere parallel versorgte Brennstoffzellen angewandt.

Die maximal auftretenden Intergasanteile werden insbesondere bei einer Nachbehandlung der Restgase in einem Wasserstoff-Rekombinator (oder einer weiteren Brennstoffzelle) reduziert.

Die oben beschriebene Betriebsweise ist vor allem vorteilhaft, wenn kleine Brennstoffzelleneinheiten oder -module (bis ca. 50 kW) zusammengeschaltet betrieben werden, da hier das alternative kaskadierte Prinzip vor allem aus Platz- oder Kostengründen nicht oder mit wesentlichem Aufwand anwendbar ist.

Erfindungsgemäß ist somit ein ein- oder beidseitiger Zirkulationsbetrieb eines Wasserstoff-Sauerstoff-PEM-Brennstoffzellenstapels mit einer abhängig von der Leistungscharakteristik und/oder Gaskonzentration variierenden Zirkulationsrate und Reaktionsgasentsorgung vorgesehen. Durch den Zirkulationsbetrieb erhöht sich die Intergasverträglichkeit bei entfallender Kaskadierung der Brennstoffzelle. Der entsprechende Aufwand für Sensoren und Aktoren der Kaskadierung und damit verbundener Fertigungsaufwand entfällt somit ebenfalls.

Der Intertgasanteil ist abhängig von den Gasqualitäten und Spülcharakteristiken. Typischerweise beträgt der Intertgasanteil maximal um 40% beim Sauerstoff und unterschreitet somit deutlich den Intertgasanteil von luftbetriebenen PEM-Brennstoffzellen einhergehend mit wesentlich höheren Wirkungsgraden.

Ausführungsbeispiele der Erfindung werden anhand einer Zeichnung näher erläutert. Hierin zeigen:
- FIG 1: einen Zirkulationsbetrieb der Reaktionsgase eines Brennstoffzellenstapels ohne Rekombination, und
- FIG 2: einen Zirkulationsbetrieb der Reaktionsgase eines Brennstoffzellenstapels mit Rekombination.

Gleiche Bezugszeichen haben in den verschiedenen Figuren die gleiche Bedeutung.

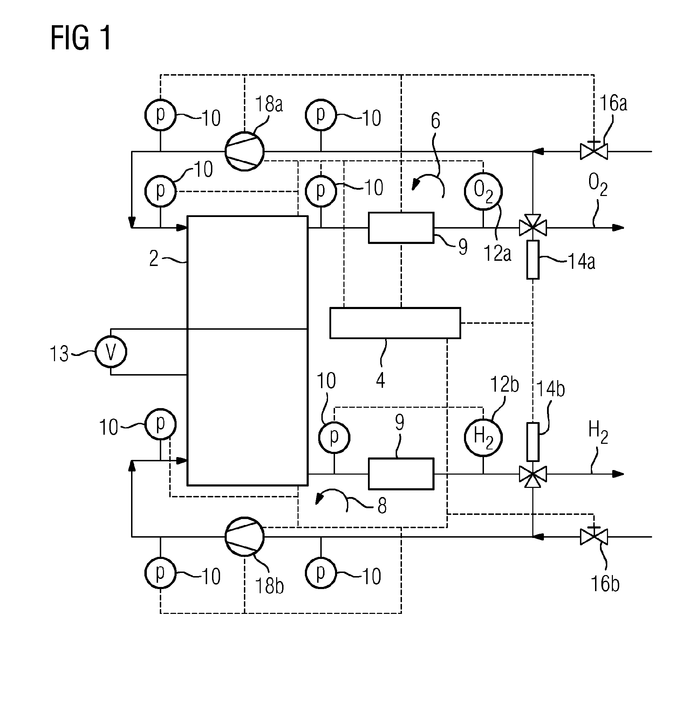

In FIG 1 ist ein Brennstoffzellenstapel 2 aus mehreren, hier nicht näher gezeigten Brennstoffzellen mit einer zugeordneten Steuerung 4 gezeigt. Gaseingangsseitig der Brennstoffzellenstapel 2 werden Sauerstoff O₂ und Wasserstoff H₂ zugefügt. Für das jeweilige Reaktionsgas ist ein Gaskreislauf 6, 8 vorgesehen, so dass die Reaktionsgase Sauerstoff und Wasserstoff in einem Zirkulationsbetrieb in das Brennstoffzellenstapel 2 zugeführt werden. Mit dem Bezugszeichen 9 sind in beiden Figuren Gas-Abscheider bezeichnet.

In jedem Gaskreislauf 6, 8 sind Druckmesser und Konzentrationsmessvorrichtungen 12a, 12b zur Messung einer Konzentration der Reaktionsgase integriert. Die Messsignale werden der Steuerung 4 zugeführt und aufgrund dieser Messsignale wird ein 3-Wege-Ventil 14a, 14b angesteuert. Ergänzend sind Voltmeter 13 zur Messung eines Spannungsabfalls im Betrieb der Brennstoffzellen vorgesehen.

Die Steuerung beider Gaskreisläufe 6, 8 erfolgt unabhängig voneinander. Wenn eine Minimalkonzentration an Sauerstoff bzw. Wasserstoff im jeweiligen Gaskreislauf 6, 8 erreicht ist, wird das vorhandene Reaktionsgas zumindest teilweise entsorgt und durch Frischgas durch ein Ventil 16a, 16b entsorgt.

In jedem Gaskreislauf 6, 8 ist zudem eine Zirkulationspumpe oder ein Verdichter 18a, 18b zum Einspeisen des jeweiligen Reaktionsgases in den Brennstoffzellenstapel 2 eingebaut.

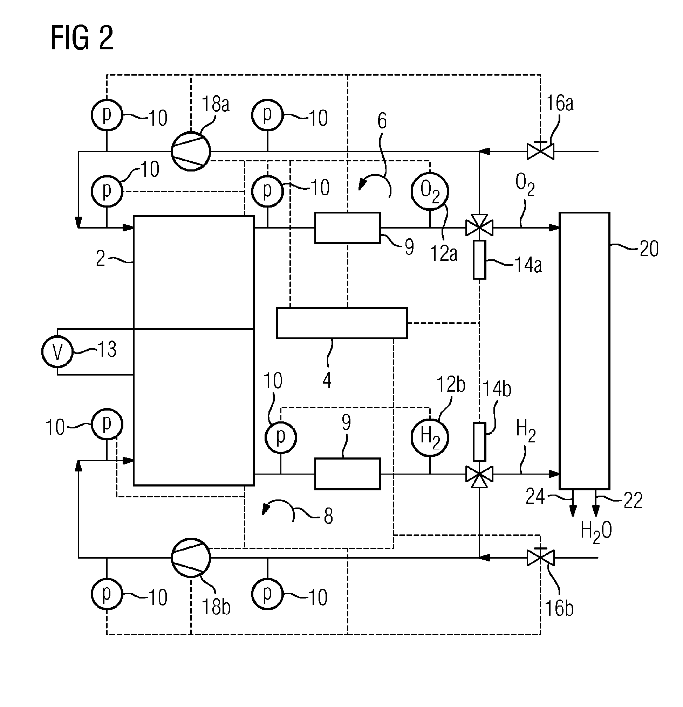

FIG 2 unterscheidet sich von FIG 1 lediglich dadurch, dass der Wasserstoff- und der Sauerstoff-Strom nach dem Brennstoffzellenstapel 2 einem Wasserstoff-Rekombinator 20 zugeführt werden, aus dem ein Wasser-Strom 22 und ein Intergas-Strom 24 hinausgeleitet werden. Anstelle des Rekombinators 20 kann ein anderer, nachgeschalteter Verbraucher wie z.B. eine weitere Brennstoffzelle oder ein weiterer Brennstoffzellenstapel vorgesehen sein, in dem der Sauerstoff und der Wasserstoff abreagieren.

## Patentansprüche

1. Verfahren zum Betrieb eines Brennstoffzellenstapels (2) umfassend eine Anzahl von Brennstoffzellen und zumindest einen Gaskreislauf (6, 8), wobei gaseingangsseitig der Brennstoffzellen als Reaktionsgase Sauerstoff und Wasserstoff zugeführt werden und wobei zumindest der Sauerstoff über den Gaskreislauf (6) in einem Zirkulationsbetrieb in den Brennstoffzellen zugeführt wird.

2. Verfahren nach Anspruch 1,
wobei beide Reaktionsgase in einem Zirkulationsbetrieb in den Brennstoffzellen zugeführt werden.

3. Verfahren nach Anspruch 2,
wobei der sauerstoffseitige und der wasserstoffseitige Zirkulationsbetrieb unabhängig voneinander gesteuert oder geregelt werden.

4. Verfahren nach einem der vorhergehenden Ansprüche,
wobei eine Konzentration des im Gaskreislauf (6, 8) befindlichen Reaktionsgases gemessen wird und aufgrund einer Konzentrationsänderung die Zufuhr und/oder Entsorgung des Reaktionsgases gesteuert oder geregelt wird.

5. Verfahren nach einem der vorhergehenden Ansprüche,
wobei eine Zellspannung der Brennstoffzellen gemessen wird und aufgrund einer Zellspannungsänderung die Zufuhr und/oder Entsorgung des Reaktionsgases gesteuert oder geregelt wird.

6. Verfahren nach einem der vorhergehenden Ansprüche,
wobei ein Volumenstrom des im Gaskreislauf (6, 8) vorhandenen Reaktionsgases verändert wird.

7. Verfahren nach einem der vorhergehenden Ansprüche,
wobei das im Gaskreislauf (6, 8) vorhandene Reaktionsgas zumindest partiell hinausgeleitet wird und frisches Reaktionsgas zugeführt wird.

8. Brennstoffzellenstapel (2) umfassend eine Anzahl von Brennstoffzellen, wobei Gaseingangsseitig als Reaktionsgase Sauerstoff und Wasserstoff zuführbar sind, weiterhin umfassend zumindest sauerstoffseitig einen Gaskreislauf (6) für einen Zirkulationsbetrieb des Sauerstoffs.

9. Brennstoffzellenstapel (2) nach Anspruch 8,
umfassend wasserstoffseitig einen weiteren Gaskreislauf (8) für einen Zirkulationsbetrieb des Wasserstoffs.

10. Brennstoffzellenstapel (2) nach Anspruch 9,
umfassend eine Steuereinheit (4), die für eine Steuerung des sauerstoffseitigen Gaskreislaufs (6) und des wasserstoffseitigen Gaskreislaufs (8) unabhängig voneinander ausgebildet ist.

11. Brennstoffzellenstapel (2) nach einem der Ansprüche 8 bis 10,
umfassend eine Konzentrationsmessvorrichtung (12a, 12b) zur Messung der Konzentration des im Gaskreislauf (6, 8) befindlichen Reaktionsgases.

12. Brennstoffzellenstapel (2) nach einem der Ansprüche 8 bis 11,
umfassend ein Voltmeter (13) zur Messung einer Zellspannung der Brennstoffzellen.

13. Brennstoffzellenstapel (2) nach einem der Ansprüche 8 bis 12,
umfassend einen im Gaskreislauf (6, 8) integrierten Verdichter (18a, 18b) für das Reaktionsgas.

14. Brennstoffzellenstapel (2) nach einem der Ansprüche 8 bis 13,
umfassend ein erstes Entsorgungsventil (14a, 14b) zum Hinausleiten des im Gaskreislauf (6, 8) vorhandenen Reaktionsgases sowie ein Zufuhrventil (16a, 16b) zum Zuführen von frischem Reaktionsgas in den Gaskreislauf (6, 8).

15. Brennstoffzellenanlage, insbesondere eine PEM-Brennstoffzellenanlage, mit zumindest einem Brennstoffzellenstapel (2) nach einem der Ansprüche 8 bis 14.
